Europäisches Patentamt

European Patent Office

Office européen des brevets

(19)

(11) Veröffentlichungsnummer: **0 203 412**
**B1**

# (12) EUROPÄISCHE PATENTSCHRIFT

(45) Veröffentlichungstag der Patentschrift:
27.12.89

(51) Int. Cl.⁴: **B 60 J 3/02,** B 60 J 3/00

(21) Anmeldenummer: **86106058.0**

(22) Anmeldetag: **02.05.86**

(54) Sonnenblende für Fahrzeuge.

(30) Priorität: **24.05.85 DE 3518751**

(43) Veröffentlichungstag der Anmeldung:
**03.12.86 Patentblatt 86/49**

(45) Bekanntmachung des Hinweises auf die Patenterteilung:
**27.12.89 Patentblatt 89/52**

(84) Benannte Vertragsstaaten:
**DE FR GB IT SE**

(56) Entgegenhaltungen:
**EP-A-0 096 154**
**DE-A-3 023 637**

(73) Patentinhaber: **Gebr. Happich GmbH, Postfach 10 02 49 Clausenbrücke 1, D-5600 Wuppertal 1 (DE)**

(72) Erfinder: **Panzner, Rudolf, Samoastrasse 5, D-5600 Wuppertal 2 (DE)**
Erfinder: **Janz, Joachim, Dachsweg 10, D-7032 Sindelfingen (DE)**

LIBER, STOCKHOLM 1989

## Beschreibung

Die Erfindung bezieht sich auf eine Sonnenblende für Fahrzeuge mit einem plattenförmigen Sonnenblendenkörper, der eine etwa rechteckige Umrißkontur und in einer seiner beiden Hauptflächen eine Ausnehmung aufweist, in der ein kastenförmiges Gehäuse eingesetzt ist, welches einen durch ein einen Öffnungswinkel von 180 Grad ermöglichendes Scharnier daran angelenkten, einseitig mit einem Spiegel ausgerüsteten Deckel trägt. (Siehe z. B. DE-A-3 222 194 oder EP-A-0 096 154).

In der DE-C-2 703 447 ist eine Sonnenblende mit einem im Sonnenblendenkörper eingelassenen Spiegel und einer dem Spiegel zugeordneten Abdeckklappe gezeigt. Diese bekannte Sonnenblende weist verschiedene Mängel auf. Zunächst tritt bei dieser Sonnenblende der Spiegelrahmen aus der Ebene des Sonnenblendenkörpers heraus und bildet harte Kanten, die den Sicherheitsanforderungen entgegenstehen. Die mit dem Spiegelrahmen verbundene Abdeckklappe ist an der oberen Spiegelrahmenkante angelenkt und nur um 90 Grad verschwenkbar. Die freie vordere Kante der Abdeckklappe ragt daher bei der Offenstellung in den Fahrgastraum hinein und kann bei einer Notbremsung oder bei einem Unfall eine Spießwirkung und damit eine erhöhte Verletzungsgefahr für den Fahrzeugbenutzer erzeugen.

Die DE-A-3 222 194 (EP-A-0 096 154) zeigt eine Sonnenblende für Fahrzeuge der gattungsgemäßen Art, bei der der mit einem Spiegel ausgerüstete Deckel um 180 Grad verschwenkt werden kann. In der offenen Lage des Deckels hängt dieser frei nach unten und ist nicht gegen Wackeln bzw. Pendeln gesichert, so daß ein Spiegelbenutzer gezwungen sein kann den Deckel mit Spiegel festzuhalten, falls der Spiegel während der Fahrt benutzt werden sollte. Aus dieser Druckschrift ist auch nicht ohne weiteres ersichtlich, wie die Anlenkung des Deckels am Sonnenblendenkörper konstruktiv gelöst werden soll.

Ausgehend von einer Sonnenblende der eingangs näher erwähnten Art liegt der Erfindung nun die Aufgabe zugrunde, eine konstruktive Lösung für die Anlenkung des Deckels am Sonnenblendenkörper aufzuzeigen, die nicht nur eine 180 Grad - Verschwenkung des Deckels ermöglicht, sondern darüber hinaus gewährleistet, daß der Deckel in der geschlossenen Lage bündig mit der entsprechenden Hauptfläche des Sonnenblendenkörpers abschließt und sowohl in der geschlossenen als auch in der offenen Lage wackelfrei am Sonnenblendenkörper gehaltert ist, wobei schließlich noch eine Anlenkung des Deckels am Sonnenblendenkörper angestrebt wird, die den Sicherheitsanforderungen ebenso gerecht wird, wie den Anforderungen, die in ästhetischer Hinsicht an eine Sonnenblende für Fahrzeuge gestellt werden.

Diese Aufgabe wird der vorliegenden Erfindung zufolge dadurch gelöst, daß das Scharnier für den Deckel mit zwei Schwenkachsen versehen ist, wobei eine Schwenkachse am Gehäuse und die andere Schwenkachse am Deckel angeordnet ist und die Schwenkachsen durch eine Lasche miteinander verbunden sind, die etwa C-förmig gestaltet ist und an ihren Endbereichen jeweils zwei außenseitige Rastausnehmungen ausweist, in die federbelastete Sperrglieder eingreifen, um je eine der beiden Schwenkachsen, in Abhängigkeit vom Öffnungswinkel des Deckels wechselseitig zu verriegeln und um den Deckel in der offenen oder geschlossenen Endlage zu arretieren.

Diese erfindungsgemäßen Maßnahmen ermöglichen es, den Deckel derart versenkt im Sonnenblendenkörper anzuordnen, daß die Außenfläche desselben bündig mit der Außenfläche des Sonnenblendenkörpers abschließt und den Deckel dennoch um 180 Grad zu verschwenken und in den Endlagen sicher zu arretieren. Die erfindungsgemäßen Maßnahmen verbessern auch, da in der geschlossenen Endlage des Deckels vorstehende Kanten und Ecken nicht mehr existieren, die sicherheitstechnischen Anforderungen und die versenkte Anordnung des Deckels sowie die nunmehr gegebene Möglichkeit der verdeckten Anordnung des Scharniers verbessern den gefälligen Gesamteindruck der neuen Sonnenblende.

Gemäß einer besonders bevorzugten Verwirklichungsform der Erfindung ist ein Sperrglied am Gehäuse und das andere Sperrglied am Deckel angeordnet, wobei die die Sperrglieder belastenden Federn und/oder die Ausbildung der Rastausnehmungen derart aufeinander abgestimmt sind, daß beim Überführen des Deckels aus der einen in die andere Endlage jeweils zuerst ein 90 Grad - Verschwenken der Lasche um die am Gehäuse vorgesehene Schwenkachse erfolgt. Hierdurch wird der Bewegungsablauf des Deckels sauber gesteuert und sichergestellt, daß die Lasche über eine nach oben vorspringende Gehäusekante oder Rahmenleiste hinweggleiten kann.

Nach einem weiteren bevorzugten Merkmal der Erfindung besteht die am Gehäuse angeordnete Schwenkachse aus einem Schenkel eines haarnadelförmig gebogenen Federdrahtabschnitts, dessen anderer Schenkel ein in die benachbarten Rastausnehmungen der Lasche eingreifendes Sperrglied bildet, wobei der die Schenkel miteinander verbindende Bogenbereich des Federdrahtabschnitts rechtwinklig abgebogen und als Lageröse ausgebildet ist. Diese Maßnahme erbringt den Vorteil, daß die Schwenkachse und das Sperrglied aus einem einteiligen Bauteil bestehen, welches zudem einfach und kostengünstig herzustellen ist.

Gemäß einer Weiterbildung der Erfindung weist der Deckel eine Sackbohrung auf, in die eine Schraubendruckfeder und ein als Raststift ausgebildetes Sperrglied eingesetzt sind.

Schließlich kann in Ausgestaltung der Erfindung vorgesehen sein, daß das kastenförmige Gehäuse mit einer umlaufenden Rahmenleiste ausgebildet ist, die mit der entsprechenden Außenfläche des Sonnenblendenkörpers etwa bün-

dig abschließt, daß die Schwenkachse am Gehäuse verdeckt hinter der Rahmenleiste angeordnet ist und daß auch die Schwenkachse am Deckel verdeckt, und zwar an einem rückwärtigen Randbereich desselben, angeordnet ist.

Ein Ausführungsbeispiel der Erfindung wird nachfolgend anhand der Zeichnung näher erläutert. Es zeigen:

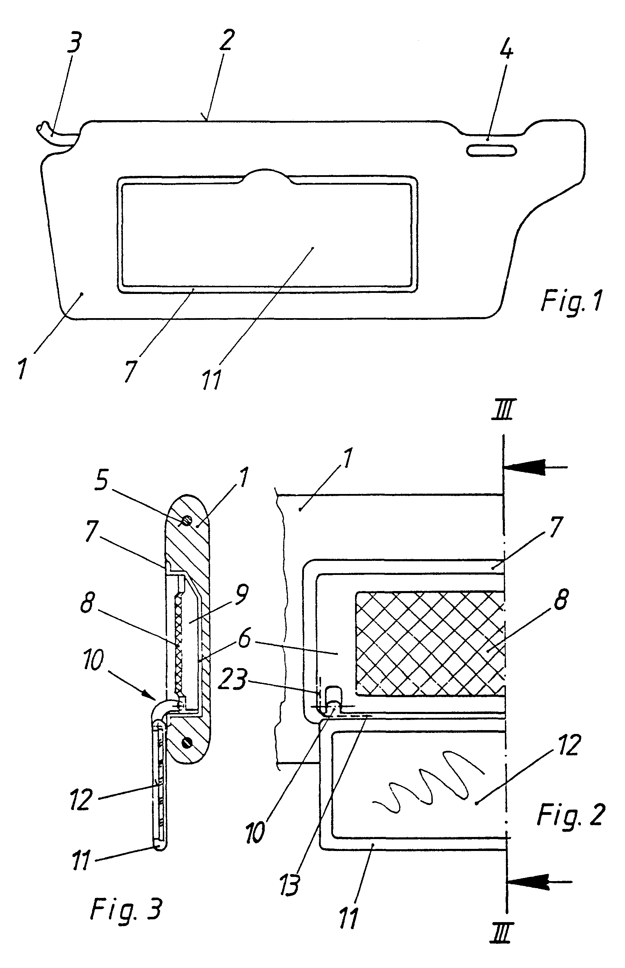

Fig. 1 die Draufsicht auf eine Sonnenblende,
Fig. 2 eine Teilansicht der Sonnenblende nach Fig. 1 mit geöffnetem Deckel,
Fig. 3 einen Schnitt III - III nach Fig. 2,
Fig. 4 einen dem nach Fig. 3 ähnlichen Schnitt ein Scharnierbereich des hier geschlossen dargestellten Deckels,
Fig. 5 den gleichen Schnitt mit geöffnetem Deckel und
Fig. 6 eine Einzelheit der Erfindung.

Die Sonnenblende besteht aus einem annähernd rechteckig und plattenförmig ausgebildeten Sonnenblendenkörper 1 mit einem an einem Endbereich der oberen Längskante 2 angeordneten, aus einem nicht gezeigten Lagergehäuse und einer Sonnenblendenachse 3 gebildeten Schwenklager und einer am anderen Endbereich derselben Längskante 2 angeordneten Gegenlagerachse 4, die lösbar in ein Gegenlagergehäuse (nicht gezeigt) einsteckbar ist. Der Sonnenblendenkörper 1 ist aus Schaumkunststoff hergestellt und durch einen darin eingebetteten Drahtrahmen 5 ausgesteift.

Der Sonnenblendenkörper 1 weist an seiner in der Gebrauchslage dem Betrachter zugewandten Hauptfläche eine Ausnehmung mit einem darin eingesetzten Gehäuse 6 auf, welches außenseitig mit einer umlaufenden Rahmenleiste 7 ausgebildet ist, die bündig mit der Hauptfläche des Sonnenblendenkörpers 1 abschließt. Das Gehäuse 6 ist zweckmäßigerweise mit einer Beleuchtungseinrichtung (nicht gezeigt) ausgerüstet, deren Bestandteile in einer durch eine Scheibe 8 aus lichtdurchlässigem Material abgeteilten Gehäusekammer 9 untergebracht sind.

Das Gehäuse 6 trägt an der unteren Randkante über zwei Scharniere 10 einen Deckel 11, der aus einer das Gehäuse 6 abdeckenden Lage um 180 Grad nach unten schwenkbar ist. Auf der im heruntergeschwenkten Zustand des Deckels 11 dem Betrachter zugewandten Seite ist der Deckel 11 mit einem Spiegel 12 verbunden.

Jedes Scharnier 10 des Deckels 11 weist zwei Schwenkachsen 13 und 14 auf, von denen das erste am Gehäuse 6 und das zweite am Deckel 11 angeordnet ist. Die Schwenkachsen 13 und 14 sind durch eine Lasche 15 miteinander verbunden, die etwa C-förmig gestaltet ist und im Bereich ihrer freien Enden Lagerbohrungen für die Schwenkachsen 13 und 14 aufweist. Die Lasche 15 weist an ihren Endbereichen jeweils zwei außenseitige Rastausnehmungen 16, 17 und 18, 19 auf. In einer der Rastausnehmungen 16 oder 17 rastet, je nach Schwenklage der Lasche 15, ein erstes, am Gehäuse 6 angeordnetes federbelastetes Sperrglied 20 und in eine der Rastausnehmungen 18 oder 19 rastet, in Abhängigkeit vom Öffnungswinkel des Deckels 11, ein zweites, am Deckel angeordnetes ebenfalls federbelastetes Sperrglied 21 ein.

Die Schwenkachse 13 besteht aus einem Schenkel eines haarnadelförmig gebogenen Federdrahtabschnitts 22 (Fig. 6), dessen anderer Schenkel das Sperrglied 20 bildet. Der die Schenkel miteinander verbindende Bogenbereich des Federdrahtabschnitts 22 ist rechtwinklig hochgebogen und als Lageröse 23 ausgebildet, die auf einen im Gehäuse 6 vorgesehenen Lagerzapfen 24 aufsteckbar ist.

Die Schwenkachse 14 besteht aus einem Rundbolzen, der gegen ein axiales Verschieben z. B. durch daran ausgebildete Nietköpfe gesichert ist. Das Sperrglied 21 ist als Raststift 25 ausgebildet und durch eine Schraubendruckfeder 26 belastet. Der Raststift 25 und die Schraubendruckfeder 26 sind in einer im Deckel 11 ausgebildeten Sackbohrung 27, die - wie dargestellt - stufenförmig abgesetzt sein kann, angeordnet. Die Schraubendruckfeder 26 weist eine weit härtere Federkennlinie auf als der das Sperrglied 20 bildende Schenkel des Federdrahtabschnitts 22.

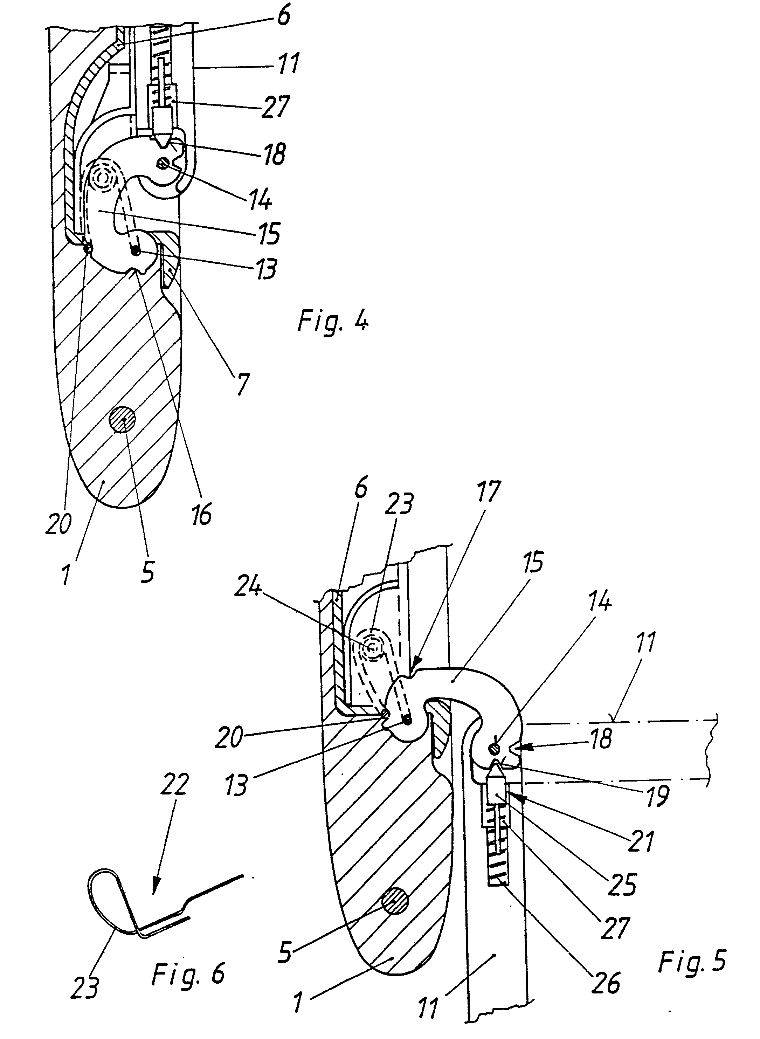

Soll nun der Deckel 11 aus seiner geschlossenen Lage (Fig. 4) in seine geöffnete Lage überführt werden, so entsteht folgender Bewegungsablauf: Der Deckel 11 wird am oberen Rand erfaßt und nach unten geschwenkt. Dabei gleitet das durch eine schwächere Federkraft belastete Sperrglied 20 aus der Rastausnehmung 17 heraus und nach einem Deckelöffnungswinkel von 90 Grad, der in Fig. 5 strichpunktiert dargestellt ist, in die Rastausnehmung 16 ein. Beim ersten Schwenkweg erfolgt also eine Drehbewegung der Lasche 15 um die Schwenkachse 13. Sobald die Lasche 15 ihre aus Fig. 5 ersichtliche Position erreicht hat, wird die Lasche 15 am Weiterschwenken durch im einzelnen nicht dargestellte Anschläge oder - wie gezeigt - durch ein Abstützen auf der Randkante der Rahmenleiste 7 gehindert. Dadurch gleitet nun bei einer Fortsetzung der Schwenkbewegung das Sperrglied 21 aus der Rastausnehmung 18 und der Deckel 11 wird um die Schwenkachse 14 um weitere 90 Grad verschwenkt, wonach das Sperrglied 21 in die Rastausnehmung 19 einrastet. Da einerseits die Lasche 15 durch das Sperrglied 20 und andererseits der Deckel 11 durch das Sperrglied 21 arretiert sind, liegt eine stabile Offenstellung des Deckels 11 vor.

Bei der Überführung des Deckels 11 in die Schließstellung erfolgt der Bewegungsablauf umgekehrt, d. h. zunächst wird der Deckel 11 mit Lasche 15 um die Schwenkachse 13 geschwenkt und hiernach lediglich der Deckel um die Schwenkachse 14 weitergeschwenkt. Der Deckel 11 wird auch in der geschlossenen Lage durch die in die Rastausnehmungen 17 und 18 eingerasteten Sperrglieder 20, 21 zuverlässig gehalten.

Wie aus der Zeichnung noch ersichtlich ist, liegen die Schwenkachsen 13 und 14 gehäusevorderseitig und der große Bogen der C-förmigen Lasche 15 ist in der geschlossenen Deckellage zum Boden des Gehäuses 6 hin ausgerichtet. Es ist weiterhin ersichtlich, daß die Schwenkachse 13 hinter der Rahmenleiste 7 angeordnet daß erforderlich ist, das Gehäuse 6 mit einem nach unten erweiterten Schwenkraum oder mit Schlitzen auszurüsten, um der Lasche 15 eine ungehinderte Schwenkbewegung zu ermöglichen.

**Patentansprüche**

1 Sonnenblende für Fahrzeuge mit einem plattenförmigen Sonnenblendenkörper (1), der eine etwa rechteckige Umrißkontur und in einer seiner beiden Hauptflächen eine Ausnehmung aufweist, in der ein kastenförmiges Gehäuse (6) eingesetzt ist, welches einen durch ein einen Öffnungswinkel von 180 Grad ermöglichendes Scharnier (10) daran angelenkten, einseitig mit einem Spiegel (12) ausgerüsteten Deckel (11) trägt, dadurch gekennzeichnet, daß das Scharnier (10) für den Deckel (11) mit zwei Schwenkachsen (13, 14) versehen ist, wobei eine Schwenkachse (13) am Gehäuse (6) und die andere Schwenkachse (14) am Deckel (11) angeordnet ist und die Schwenkachsen (13, 14) durch eine Lasche (15) miteinander verbunden sind, die etwa C-förmig gestaltet ist und an ihren Endbereichen jeweils zwei außenseitige Rastausnehmungen (16, 17 und 18, 19) aufweist, in die federbelastete Sperrglieder (20, 21) eingreifen, um je eine der beiden Schwenkachsen (13, 14), in Abhängigkeit vom Öffnungswinkel des Deckels (11) wechselseitig zu verriegeln und um den Deckel (11) in der offenen und geschlossenen Endlage zu arretieren.

2. Sonnenblende nach Anspruch 1, dadurch gekennzeichnet, daß ein Sperrglied (20) am Gehäuse (6) und das andere Sperrglied (21) am Deckel (11) angeordnet ist, wobei die die Sperrglieder (20, 21) belastenden Federn und/oder die Ausbildung der Rastausnehmungen (16, 17 bzw. 18, 19) derart aufeinander abgestimmt sind, daß beim Überführen des Deckels (11) aus der einen in die andere Endlage jeweils zuerst ein 90 Grad - Verschwenken der Lasche (15) um die am Gehäuse (6) vorgesehene Schwenkachse (13) erfolgt.

3. Sonnenblende nach Anspruch 1 oder 2, dadurch gekennzeichnet, daß die am Gehäuse (6) angeordnete Schwenkachse (13) aus einem Schenkel eines haarnadelförmig gebogenen Federdrahtabschnitts (22) besteht, dessen anderer Schenkel ein in die benachbarten Rastausnehmungen (16, 17) der Lasche (15) eingreifendes Sperrglied (20) bildet und daß der die Schenkel miteinander verbindende Bogenbereich des Federdrahtabschnitts (22) rechtwinklig hochgebogen und als Lageröse (23) ausgebildet ist.

4. Sonnenblende nach einem der Ansprüche 1 bis 3, dadurch gekennzeichnet, daß der Deckel (11) eine Sackbohrung (27) aufweist, in die eine Schraubendruckfeder (26) und ein als Raststift (25) ausgebildetes Sperrglied (21) eingesetzt sind.

5. Sonnenblende nach einem der Ansprüche 1 bis 4, dadurch gekennzeichnet, daß das kastenförmige Gehäuse (6) mit einer umlaufenden Rahmenleiste (7) ausgebildet ist, die mit der entsprechenden Außenfläche des Sonnenblendenkörpers (1) etwa bündig abschließt, daß die Schwenkachse (13) am Gehäuse (6) verdeckt hinter der Rahmenleiste (7) angeordnet ist und daß auch die Schwenkachse (14) am Deckel (11) verdeckt, und zwar an einem rückwärtigen Randbereich desselben, angeordnet ist.

**Claims**

1. A sun visor for a vehicle, the visor comprising a plate-like visor body (1) having a substantially rectangular outer contour and in one of its main faces a recess into which a box-shaped casing (6) is inserted, wherein the casing is provided with a lid (11) swivellably attached thereto by means of a joint (10) permitting the lid to be swivelled through an opening of 180 degrees, and wherein one side of the lid is fitted with a mirror (12), characterized in that the joint (10) for the lid (11) has two swivel pins (13, 14), one being arranged on the casing (6) and the other one (14) on the lid (11) and both being connected by a butt strap (15) which is substantially C-shaped, and in that each of the strap's two end portions is provided at its outer edge with two notches (16, 17 and, respectively, 18, 19) engageable by spring-biased locking elements (20 and, respectively, 21) so as to alternately latch - in dependence on the opening angle between the lid (11) and the casing (6) - a respective one of the two swivel pins (13, 14) and to secure the lid (11) in its open and, respectively, in its closing end positions.

2. A sun visor according to claim 1, characterized in that the one locking element (20) is arranged on the casing (6) and the other one (21) on the lid (11), and in that the springs biasing the locking elements (20, 21) and/or the shape of the notches (16, 17 and 18, 19) are matched one to the other so that, when the lid (11) is moved from its one into its other end position, the butt strap (15) is always first swivelled through 90 degrees about the swivel pin (13) arranged on the casing (6).

3. A sun visor according to claim 1 or claim 2, characterized in that one leg of a length of spring wire (22) bent into hair-pin shape forms the swivel pin (13) arranged on the casing (6), that the other leg of said hair pin forms the one locking element (20) serving to engage the - neighbouring - notches (16, 17) of the strap (15), and in that the arched section resulting from bending the wire length (22) into hair-pin shape and constituting the joint between the two legs is bent rectangularly upwardly and forms a lug (23).

4. A sun visor according to any of the claims 1 to 3, characterized in that the lid (11) is provided with a blind bore (27) into which a compression spring (26) and the other locking element (21) are inserted, and in that the other locking element is a plunger pin (25).

5. A sun visor according to any of the claims 1 to 4, characterized in that the box-shaped casing (6) is provided with a continuous shoulder (7) which terminates substantially flush with the respective outer face of the visor body (1), that the swivel pin (13) arranged on the casing (6) is concealed behind the shoulder (7), and in that the other swivel pin (14) too is concealedly arranged on the lid (11), namely in a rear border area thereof.

**Revendications**

1. Pare-soleil pour véhicules, avec un corps de pare-soleil en forme de plaque qui présente un contour extérieur à peu près rectangulaire et un évidement dans l'une de ses deux faces principales, dans lequel est installé un carter (6) en forme de boîte qui, au moyen d'une charnière (10) permettant un angle d'ouverture de 180 degrés, porte un couvercle (11) articulé sur celui-ci, équipé sur une face d'un miroir (12), caractérisé en ce que la charnière (10) destinée au couvercle (11) est pourvue de deux axes de pivotement (13, 14), un axe de pivotement (13) étant disposé sur le carter (6) et l'autre axe de pivotement (14) étant disposé sur le couvercle (11), et les axes de pivotement (13, 14) étant reliés ensemble au moyen d'une boucle (15) approximativement en forme de C et présentant à ses zones d'extrémité chaque fois deux évidements d'encliquetage (16, 17 et 18, 19) situés côté extérieur, dans lesquels des organes de verrouillage (20, 21) chargés élastiquement viennent en prise, pour verrouiller alternativement chaque fois l'une des deux axes de pivotement en fonction de l'angle d'ouverture du couvercle (11) et pour bloquer le couvercle (11) en position finale ouverte ou fermée.

2. Pare-soleil selon la revendication 1, caractérisé en ce qu'un organe de verrouillage (20) est disposé sur le carter (6) et l'autre organe de verrouillage (21) est fixé sur le couvercle (11), les ressorts chargeant les organes de verrouillage (20, 21) et/ou la réalisation des évidements d'encliquetage (16, 17 ou 18, 19) étant déterminés l'une par rapport à l'autre de façon que lors du passage du couvercle (11) d'une position finale dans l'autre, il s'ensuive à chaque fois d'abord un pivotement de 90 degrés de la boucle (15) autour de l'axe de pivotement (13) prévu sur le carter (6).

3. Pare-soleil selon la revendication 1 ou 2, caractérisé en ce que l'axe de pivotement (13) disposé sur le carter (6) se compose d'un côté d'une section de filament élastique (22) plié en forme d'épingle à cheveux, dont l'autre côté forme un organe de verrouillage (20) venant en prise dans les évidements d'encliquetage (16, 17) voisins de la boucle (15), la zone coudée de la section de filament élastique (22) reliant entre eux les côtés étant pliée à angle droit et réalisée sous forme d'oeillet de palier (23).

4. Pare-soleil selon l'une des revendications 1 à 3, caractérisé en ce que le couvercle (11) présente un trou borgne (27) dans lequel sont installés un ressort de compression hélicoïdal (26) et un organe de verrouillage (21) réalisé sous forme de broche d'encliquetage (25).

5. Pare-soleil selon l'une des revendications 1 à 4, caractérisé en ce que le carter (6) en forme de boîte est réalisé avec une bande de cadre (7) périphérique, se raccordant, à peu près en affleurement, à la face extérieure correspondante du corps de pare-soleil (1), en ce que l'axe de pivotement (13) situé sur le carter (6) est disposé occulté derrière la bande de cadre (7) et que l'axe de pivotement (14) situé sur le couvercle (11) est également disposé occulté, et, il est vrai, sur une zone de bord arrière de celui-ci.

Fig.1

Fig. 3

Fig. 2

Fig. 4

Fig. 6

Fig. 5